# EUROPÄISCHE PATENTANMELDUNG

(11) **EP 3 372 077 A1**
(43) Veröffentlichungstag der Anmeldung: **12.09.2018**
(21) Anmeldenummer: 18401021.3
(22) Anmeldetag: 06.03.2018
(51) Int. Cl.: A01M 7/00

(54) **REGELSYSTEM FÜR EIN LANDWIRTSCHAFTLICHES FAHRZEUG**

(30) Priorität: 08.03.2017 DE 102017104803
(71) Anmelder: Amazonen-Werke H. Dreyer GmbH & Co. KG, 49205 Hasbergen (DE)
(72) Erfinder: Austermann, Stefan, 48291 Telgte (DE); Oberheide, Friedrich, 49143 Bissendorf (DE); Klemann, Timo, 49191 Belm (DE); große Prues, Frank, 49593 Bersenbrück (DE); Heer, Jochen, 49074 Osnabrück (DE)

(57) **Zusammenfassung**

Die Erfindung betrifft ein Steuer- und/oder Regelsystem für ein landwirtschaftliches Nutzfahrzeug (1), welches ein Verteilergestänge (3) zum Ausbringen von Material, wie Düngemittel, Pflanzenschutzmittel oder Saatgut aufweist und sich quer zur Fahrtrichtung erstreckt. Das Verteilergestänge (3) weist ein Mittelteil (4) und zwei mit dem Mittelteil (4) verbundene seitliche Ausleger (5) mit mehreren zueinander durch einen Klappvorgang in Transportstellung einklappbaren und in Arbeitsstellung ausklappbaren, durch Gelenke verbundene Gestängeabschnitte (6) auf, wobei jedem Gestängeabschnitt (6) eine Stelleinrichtung zugeordnet ist, wodurch das Verteilergestänge (3) von einer Transportstellung in eine Arbeitsstellung und umgekehrt überführbar ist. Die Überführung in eine Transport-/ bzw. Arbeitsstellung umfasst mehrere Teilschritte, den Klappvorgang einschließend. Weiterhin weist das System mehrere Sensoren und eine Datenverarbeitungseinheit auf, welche derart konfiguriert ist, dass die Signale der Sensoren verarbeitet werden und auf deren Basis ein Stellsignal für die Stelleinrichtung generiert wird. Dabei weist die Datenverarbeitungseinheit einen Automatikmodus auf, wodurch zumindest der auf den Klappvorgang folgende Teilschritt automatisch einleitbar ist. Weiterhin betrifft die Erfindung ein landwirtschaftliches Nutzfahrzeug (1) und ein Verfahren zur Steuerung und/oder Regelung eines landwirtschaftlichen Nutzfahrzeuges (1).

## Beschreibung

Die Erfindung betrifft ein Steuer- und/oder Regelsystem für ein landwirtschaftliches Nutzfahrzeug gemäß dem Oberbegriff des Patentanspruchs 1. Ferner betrifft die Erfindung ein landwirtschaftliches Nutzfahrzeug gemäß Anspruch 11, sowie ein Verfahren zur Steuerung und/oder Regelung eines landwirtschaftlichen Nutzfahrzeuges gemäß Anspruch 12. Derartige Systeme sind beispielhaft aus EP 25 10 784 B1 bekannt.

Derartige Systeme werden für landwirtschaftliche Nutzfahrzeuge zum Ausbringen von Material, wie Düngemittel, Pflanzenschutzmittel oder Saatgut verwendet und weisen ein Verteilergestänge auf, welches sich quer zur Fahrtrichtung erstreckt. Das Verteilergestänge umfasst ein Mittelteil und zwei mit dem Mittelteil verbundene seitliche Ausleger mit mehreren zueinander in Transportstellung einklappbaren und in Arbeitsstellung ausklappbaren, durch Gelenke verbundenen Gestängeabschnitten. Das Verteilergestänge kann in der ausgeklappten Arbeitsstellung eine Arbeitsbreite von bis zu 50m umfassen.

Zum Ein-/Ausklappen der Ausleger ist jedem Gestängeabschnitt eine hydraulische Einrichtung zugeordnet. Das Ein- und Ausklappen der einzelnen Gestängeabschnitte lässt sich im Speziellen dadurch erreichen, dass dem Verteilergestänge weiterhin eine Datenverarbeitungseinheit zugeordnet ist, welche derart konfiguriert ist, dass aufgrund der von Sensoren übermittelten Messsignale bezüglich der Stellung der einklappbaren Gestängeabschnitte zueinander, die jeweilige hydraulische Einrichtung zum Ein-/Ausklappen angesteuert wird.

Bislang können allerdings mehrere einzelne Schritte und damit eine Vielzahl an einzelnen Eingaben durch den Benutzer mittels der Datenverarbeitungseinheit erforderlich sein, um das Verteilergestänge aus- oder einzuklappen, bzw. vollständig in die Arbeits- oder Transportstellung zu überführen. Die vollständige Überführung des Verteilergestänges in die Arbeits- oder Transportstellung und umgekehrt umfasst hierbei nicht nur einen Klappvorgang, sondern auch eine Entriegelung, bzw. Verriegelung des Verteilergestänges, sowie ein Anheben und Absenken des Verteilergestänges. Anders gesagt umfasst die vollständige Überführung des Verteilergestänges in die Arbeits- oder Transportstellung und umgekehrt mehrere, voneinander unabhängige Teilschritte, welche typischerweise in einer festgelegten Reihenfolge ausgeführt werden. Da es bisher nicht möglich war, die Gelenkpunkte der Gestängeabschnitte und damit den Klappvorgang zu überwachen, war die Überführung des Verteilergestänges erschwert, da es beispielsweise erforderlich war, dass der Benutzer selbst erkennen muss, wann das Verteilergestänge ausreichend eingeklappt ist, bevor es in einem nächsten Teilschritt in eine Transportstellung abgesenkt werden kann.

Der Erfindung liegt daher die Aufgabe zugrunde, ein Steuer- und/oder Regelsystem für ein landwirtschaftliches Nutzfahrzeug anzugeben, wobei eine möglichst schnelle vollständige Überführung des Verteilergestänges in eine Arbeits- bzw. Transportstellung und umgekehrt ermöglicht werden kann. Der Erfindung liegt ferner die Aufgabe zu Grunde, ein landwirtschaftliches Nutzfahrzeug sowie ein Verfahren zur Steuerung und/oder Regelung eines landwirtschaftlichen Nutzfahrzeuges anzugeben.

Diese Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 11 gelöst. Ferner wird die Aufgabe im Hinblick auf das Verfahren durch den Gegenstand des Anspruchs 12 gelöst.

Die Erfindung beruht auf dem Gedanken, ein Steuer- und/oder Regelsystem für ein landwirtschaftliches Nutzfahrzeug anzugeben, welches ein Verteilergestänge zum Ausbringen von Material, wie Düngemittel, Pflanzenschutzmittel oder Saatgut aufweist und sich quer zur Fahrtrichtung erstreckt. Das Verteilergestänge weist ein Mittelteil und zwei mit dem Mittelteil verbundene seitliche Ausleger mit mehreren zueinander durch einen Klappvorgang in Transportstellung einklappbaren und in Arbeitsstellung ausklappbaren, durch Gelenke verbundene Gestängeabschnitte auf, wobei jedem Gestängeabschnitt eine Stelleinrichtung zugeordnet ist, wodurch das Verteilergestänge von einer Transportstellung in eine Arbeitsstellung und umgekehrt überführbar ist. Die Überführung in eine Transport-/ bzw. Arbeitsstellung umfasst mehrere Teilschritte, den Klappvorgang einschließend. Weiterhin weist das System mehrere Sensoren und eine Datenverarbeitungseinheit auf, welche derart konfiguriert ist, dass die Signale der Sensoren verarbeitet werden und auf deren Basis ein Stellsignal für die Stelleinrichtung generiert wird. Dabei weist die Datenverarbeitungseinheit einen Automatikmodus auf, wodurch zumindest der auf den Klappvorgang folgende Teilschritt automatisch einleitbar ist.

Die Erfindung hat den Vorteil, dass durch den Automatikmodus mehrere einzelne und voneinander unabhängige Teilschritte automatisch ausgeführt werden können und damit der Zeitaufwand zum vollständigen Ein- und Ausklappen des Gestänges erheblich reduziert werden kann. Es ist daher möglich, mehrere getrennt voneinander ablaufende separate Teilschritte in einem einzigen Vorgang automatisch zu steuern und daher generell die vollständige Überführung des Verteilergestänges zu beschleunigen. Insbesondere durch die automatische Einleitung des auf den Klappvorgang folgenden Teilschritts ist das Verteilergestänge schnellstmöglich betriebsbereit. Eine manuelle und zeitaufwendige Steuerung durch den Benutzer kann demnach verhindert werden. Beispielhaft kann es vermieden werden, dass der Benutzer eigenhändig entscheiden muss, ob das Verteilergestänge ausreichend eingeklappt oder ausgeklappt ist, bevor er nach dem Klappvorgang manuell einen neuen Betriebsvorgang, bzw. Teilschritt startet.

Es kann insbesondere vorgesehen sein, dass nachfolgende Teilschritte zumindest teilweise gleichzeitig ablaufen. Hierbei ist die Wendung "der auf den Klappvorgang folgende Teilschritt" so zu verstehen, dass der folgende Teilschritt nicht begonnen wird, bevor der Klappvorgang begonnen wird. Es ist also vorgesehen aufeinander folgende Schritte zumindest teilweise gleichzeitig durchzuführen. Insbesondere kann jedoch alternativ vorgesehen sein, den nachfolgenden Teilschritt erst nach dem Ende des Klappvorganges zu starten. Dasselbe gilt für alle weiteren auszuführenden Teilschritte: Auch hier können aufeinanderfolgende Teilschritte wahlweise zumindest teilweise gleichzeitig durchgeführt werden oder der folgende Teilschritt kann jeweils erst begonnen werden, wenn der vorheriger Teilschritt beendet wurde. Dies kann insbesondere auch davon abhängen welche Teilschritte jeweils durchzuführen sind. So kann es einerseits beispielsweise möglich sein eine Absenkung des Verteilergestänges in die Transportposition erst durchzuführen, wenn das Verteilergestänge vollständig eingeklappt ist. Andererseits kann es möglich sein das Anheben des Verteilergestänges nach der Feldarbeit und das darauf folgende Einklappen des Verteilergestänges zumindest teilweise gleichzeitig durchzuführen. Es ist zudem vorgesehen, dass der nachfolgende Teilschritt begonnen wird, wenn der vorangegangene Teilschritt zu einem festgelegten Anteil abgeschlossen wurde, beispielsweise 90 %. Beispielhaft kann der Klappvorgang des Gestänges in die Transportstellung bereits beginnen, wenn die Gestängehöhe 85% der Maximalhöhe oder wahlweise eine festgelegte absolute Höhe erreicht hat.

Bevorzugte Ausführungsformen der Erfindung sind in den Unteransprüchen angegeben.

Bei einer bevorzugten Ausführungsform der Erfindung ist bei einer Überführung des Verteilergestänges in eine Transportstellung der auf den Klappvorgang folgende Teilschritt durch ein Absenken des Verteilergestänges gebildet. Das bedeutet, dass das Verteilergestänge nach der Beendigung des Klappvorgangs, insbesondere des Einklappens, automatisch in eine Transportstellung abgesenkt werden kann. Somit kann der Zeitaufwand zum vollständigen Beenden des Betriebes des Verteilergestänges reduziert werden und das Verteilergestänge schnellstmöglich in eine Transportstellung zum Abtransport vom zu bearbeitenden Feld gebracht werden. Das Absenken des Verteilergestänges in Transportstellung dient hierbei der Arretierung des Verteilergestänges beispielsweise für eine Straßenfahrt.

Bei einer weiteren bevorzugten Ausführungsform ist bei einer Überführung des Verteilergestänges in eine Arbeitsstellung der auf den Klappvorgang folgende Teilschritt durch eine Entriegelung des Verteilergestänges und/oder ein automatisches Starten der Gestängeführung gebildet. Das bedeutet, dass das Verteilergestänge nach der Beendigung des Klappvorgangs, insbesondere des Ausklappens, automatisch entriegelt und/oder automatisch in Betrieb genommen werden kann. Somit steht das Verteilergestänge schnellstmöglich für den Betrieb auf dem zu bearbeitenden Boden bereit. Es sind hierbei keine weiteren manuellen Steuerungen vom Benutzer erforderlich.

Vorzugsweise weist das System eine Verriegelungsvorrichtung zur Ausführung eines Teilschritts zur Überführung des Verteilergestänges in eine Transport-/ bzw. Arbeitsstellung auf, welcher eine Verriegelung/Entriegelung des Verteilergestänges umfasst. Mittels der Verriegelungsvorrichtung, welche beispielhaft ein Riegelelement und einen Zwischenrahmen aufweisen kann, welcher am Mittelteil angebracht sein kann, kann beispielsweise das Verteilergestänge zum Schwingungsausgleich entriegelt oder verriegelt werden. Der Teilschritt der Verriegelung/Entriegelung kann von der Datenverarbeitungseinheit einzeln und oder in Kombination mit anderen Teilschritten automatisch eingeleitet werden. Die Verriegelungsvorrichtung umfasst hierbei zudem einen Aktor, beispielsweise einen Stellzylinder, zur Durchführung des Verriegelungsvorganges und vorzugsweise eine Sensor zur Erfassung der Stellung der Verriegelungsvorrichtung, beispielsweise ein Potentiometer an einem Gelenk oder Endlagenschalter an dem Aktor der Verriegelungsvorrichtung.

In einer weiteren Ausführungsform weist das System eine Neigungsvorrichtung zur Ausführung eines Teilschritts zur Überführung des Verteilergestänges in eine Transport-/ bzw. Arbeitsstellung auf, welcher eine Neigungsverstellung des Verteilergestänges umfasst. Durch die Neigungsvorrichtung, welche beispielhaft Stellzylinder umfassen kann, die den Auslegern zugeordnet sind, ist das Verteilergestänge um eine horizontale Achse schwenkbar angeordnet. Dadurch lässt sich das Verteilergestänge vorzugsweise waagerecht ausrichten, damit es effizient von einer Arbeits-/ bzw. in eine Transportstellung und umgekehrt überführt werden kann. Der Teilschritt der Neigungsverstellung kann von der Datenverarbeitungseinheit einzeln und oder in Kombination mit anderen Teilschritten automatisch eingeleitet werden. Die Neigungsvorrichtung umfasst hierbei vorzugsweise zudem zumindest einen Sensor zur Erfassung der Stellung der Neigungsvorrichtung, beispielsweise ein Potentiometer an einem Gelenk oder Endlagenschalter an dem Aktor der Neigungsvorrichtung. Auch kann die Neigungsposition im ebenen Gelände durch an dem Verteilergestänge angeordnete Ultraschallsensoren ermittelt werden.

Weiter vorzugsweise weist das System eine Hubvorrichtung zur Ausführung eines Teilschritts zur Überführung des Verteilergestänges in eine Transport-/ bzw. Arbeitsstellung auf, welcher ein Anheben/Absenken des Verteilergestänges umfasst. Mittels der Hubvorrichtung, beispielsweise einem höhenverstellbaren Hubrahmen, ist das Verteilergestänge vertikal bewegbar angeordnet und kann daher angehoben und abgesenkt werden. Der Teilschritt des Anhebens/Absenkens kann von der Datenverarbeitungseinheit einzeln und oder in Kombination mit anderen Teilschritten automatisch eingeleitet werden. Zu diesem Zweck ist an der Hubvorrichtung vorzugsweise zumindest ein Sensor zur Ermittlung der Position der Hubvorrichtung und/oder des der Hubvorrichtung zugeordneten Aktors angeordnet. Beispielsweise kann an einem Gelenk der Hubvorrichtung ein Potentiometer angeordnet sein oder der Aktor mit Endlagenschaltern versehen sein. Der Abstand der Hubvorrichtung zum Untergrund kann beispielsweise auch durch an dem Mittelteil angeordnete Ultraschallsensoren ermittelt werden.

Mittels der Stelleinrichtung, insbesondere der hydraulischen Einrichtung, welche jedem Gestängeabschnitt zugeordnet ist, kann das Verteilergestänge ein- bzw. ausgeklappt werden. Anders gesagt kann mittels der Stelleinrichtungen der Klappvorgang durchgeführt werden.

Generell werden bestimmte Lageänderungen des Verteilergestänges oder Bewegungen von einer zugehörigen Vorrichtung ausgeführt. Derartige notwendige Teilschritte dienen der effizienten und vollständigen Überführung des Verteilergestänges in eine Arbeits-/ bzw. Transportstellung und umgekehrt. Vorteilhafterweise sind alle oder mehrere der einzelnen Teilschritte von der Datenverarbeitungseinheit automatisch einleitbar. Die Teilschritte werden vorzugsweise nacheinander in einer bestimmten Reihenfolge automatisch durchgeführt, um das Verteilergestänge in eine Arbeits- bzw. Transportstellung zu überführen.

Vorzugsweise sind die Sensoren derart ausgebildet und/oder angeordnet, dass der Klappvorgang, insbesondere das Ende des Klappvorgangs, überwachbar ist. Die Sensoren können hierbei vorteilhafterweise als Potentiometer, insbesondere als Linearpotentiometer und/oder Drehpotentiometer, ausgebildet sein. Demnach können die Sensoren eine Position und/oder eine Winkelstellung der einzelnen Gestängeabschnitte ermitteln. Dadurch kann sowohl eine Endlage als auch eine Zwischenlage des jeweiligen Gestängeabschnitts während des Klappvorgangs ermittelt werden. Der gesamte Klappvorgang des Verteilergestänges lässt sich demnach kontinuierlich überwachen und das Ende des Klappvorgangs präzise bestimmen.

Vorteilhafterweise sind die Sensoren jeweils einem Gelenk und/oder einer Stelleinrichtung zwischen zwei zueinander einklappbaren Gestängeabschnitten zugeordnet, wodurch eine Position des jeweiligen Gestängeabschnitts erfassbar ist. Je nach Ausbildung des Sensors lässt sich somit eine aktuelle Position und/oder Winkelstellung des Gestängeabschnitts ermitteln. Über Datenleitungen oder kabellos können die Messsignale der Sensoren hinsichtlich der jeweiligen aktuellen Position des Gestängeabschnitts an die Datenverarbeitungseinheit weitergeleitet werden. Damit der Klappvorgang kontinuierlich überwacht werden kann, können die Messsignale der Sensoren kontinuierlich oder in zeitlicher taktweisen Abfolge an die Datenverarbeitungseinheit übermittelt werden.

In einer bevorzugten Ausführungsform sind mehrere oder alle Teilschritte basierend auf den Messsignalen der Sensoren mittels der Datenverarbeitungseinheit automatisch einleitbar. Da es mittels der Sensorik möglich ist, auf besagte Weise den Klappvorgang des Verteilergestänges zu überwachen, insbesondere die Gelenkpunkte des Gestänges zu überwachen, kann das Ende des Klappvorgangs präzise bestimmt werden und basierend darauf weitere Teilschritte automatisch eingeleitet werden. Da die Sensoren kontinuierlich die aktuelle Position des Verteilergestänges beim Klappvorgang überwachen können, lässt sich somit vorteilhafterweise die gesamte Überführung des Verteilergestänges von einer Arbeitsstellung in eine Transportstellung und umgekehrt automatisieren.

Weiter vorzugsweise sind mehrere oder alle Teilschritte basierend auf einer einzigen Benutzereingabe einleitbar. Hierbei kann die Datenverarbeitungseinheit eine manuelle Betätigungsvorrichtung, insbesondere eine Automatiktaste, aufweisen, wodurch der Benutzer die Ausführung der Teilschritte automatisch einleiten kann. Dabei kann die einzelne Benutzereingabe beispielhaft durch eine gewünschte Arbeitsbreite gebildet sein, und auch als Sollwert zur Regelung der Klappvorgänge dienen.

Im Rahmen der Anmeldung wird weiterhin ein landwirtschaftliches Nutzfahrzeug zum Ausbringen von Material, wie Düngemittel, Pflanzenschutzmittel oder Saatgut mit einem Steuer- und/oder Regelsystem nach einem der vorhergehenden Ausführungsformen beansprucht.

Weiterhin wird ein Verfahren zur Steuerung und/oder Regelung eines landwirtschaftlichen Nutzfahrzeuges mit einem Steuer- und/oder Regelsystem beansprucht, welches ein Verteilergestänge zum Ausbringen von Material, wie Düngemittel, Pflanzenschutzmittel oder Saatgut umfasst, welches sich quer zur Fahrtrichtung erstreckt. Das Verteilergestänge weist ein Mittelteil und zwei mit dem Mittelteil verbundene seitliche Ausleger mit mehreren zueinander durch einen Klappvorgang in Transportstellung einklappbaren und in Arbeitsstellung ausklappbaren, durch Gelenke verbundene Gestängeabschnitte auf, wobei jedem Gestängeabschnitt eine Stelleinrichtung zugeordnet ist, wodurch das Verteilergestänge von einer Transportstellung in eine Arbeitsstellung und umgekehrt überführbar ist. Die Überführung in eine Transport-/ bzw. Arbeitsstellung umfasst mehrere Teilschritte, den Klappvorgang einschließend. Das System umfasst mehrere Sensoren und eine Datenverarbeitungseinheit, welche derart konfiguriert ist, dass die Signale der Sensoren verarbeitet werden und auf deren Basis ein Stellsignal für die Stelleinrichtung generiert wird. Zumindest der auf den Klappvorgang folgende Teilschritt wird automatisch eingeleitet. Vorteilhafterweise lässt sich somit der Zeitaufwand zur Überführung des Verteilergestänges von einer Arbeits- in eine Transportstellung und umgekehrt erheblich reduzieren und insgesamt beschleunigen.

Vorzugsweise erfassen die mehreren Sensoren eine Position des jeweiligen Gestängeabschnitts und mehrere oder alle Teilschritte werden basierend auf den Messsignalen der Sensoren mittels der Datenverarbeitungseinheit automatisch eingeleitet.

In einer weiteren bevorzugten Ausführungsform wird nach dem Klappvorgang bei einer Überführung des Verteilergestänges in eine Transportstellung das Verteilergestänge automatisch abgesenkt.

Weiter vorzugsweise wird das Verteilergestänge bei einer Überführung in die Transportstellung vor dem Klappvorgang automatisch waagerecht ausgerichtet und/oder verriegelt und/oder die Gestängeführung automatisch beendet.

Zusammenfassend umfassen vorzugsweise die Teilschritte zur Überführung der Ausleger, bzw. des Verteilergestänges in eine Transportstellung folgende Schritte, wobei zumindest der auf den Klappvorgang folgende Teilschritt automatisch eingeleitet wird:
a) die Gestängeführung wird automatisch beendet;
b) das Verteilergestänge wird angehoben;
c) das Verteilergestänge wird waagerecht ausgerichtet;
d) das Verteilergestänge wird verriegelt;
e) das Verteilergestänge wird eingeklappt;
f) das Verteilergestänge wird in Transportstellung abgesenkt.

Vorzugsweise werden mehrere oder alle Teilschritte a) bis f) automatisch eingeleitet.

In einer weiteren bevorzugten Ausführungsform wird nach dem Klappvorgang bei einer Überführung des Verteilergestänges in eine Arbeitsstellung das Verteilergestänge automatisch entriegelt und/oder die Gestängeführung automatisch gestartet.

Vorzugsweise wird das Verteilergestänge bei einer Überführung in die Arbeitsstellung vor dem Klappvorgang automatisch angehoben.

Zusammenfassend umfassen vorzugsweise die Teilschritte zur Überführung der Ausleger, bzw. des Verteilergestänges in eine Arbeitsstellung folgende Schritte, wobei zumindest der auf den Klappvorgang folgende Teilschritt automatisch eingeleitet wird:
a) das Verteilergestänge wird angehoben;
b) das Verteilergestänge wird ausgeklappt;
c) das Verteilergestänge wird entriegelt;
d) die Gestängeführung wird automatisch gestartet.

Vorzugsweise werden mehrere oder alle Teilschritte a) bis d) automatisch eingeleitet.
Zu den Vorteilen des Verfahrens zur Steuerung und/oder Regelung eines landwirtschaftlichen Nutzfahrzeuges wird auf die im Zusammenhang mit dem Steuer- und/oder Regelsystem erläuterten Vorteile verwiesen.

Die Erfindung wird nachstehend mit weiteren Einzelheiten unter Bezug auf die beigefügten schematischen Zeichnungen näher erläutert. Die dargestellten Ausführungsformen stellen lediglich Beispiele dar, wie das erfindungsgemäße Steuer- und/oder Regelsystem ausgestaltet sein kann und stellen keine abschließende Begrenzung dar. Darin zeigen
- Fig. 1: eine perspektivische Ansicht eines erfindungsgemäßen Steuer- und/oder Regelsystems gemäß einem ersten Ausführungsbeispiel mit einem Verteilergestänge in einer Transportstellung;
- Fig. 2: eine perspektivische Ansicht eines erfindungsgemäßen Steuer- und/oder Regelsystems gemäß Fig. 1 mit einem Verteilergestänge in einer angehobenen Transportstellung;
- Fig. 3: eine perspektivische Ansicht eines erfindungsgemäßen Steuer- und/oder Regelsystems gemäß Fig. 1 mit einem Verteilergestänge in einer teilweise ausgeklappten Arbeitsstellung;
- Fig. 4: eine perspektivische Ansicht eines erfindungsgemäßen Steuer- und/oder Regelsystems gemäß Fig. 1 mit einem Verteilergestänge in einer Arbeitsstellung;
- Fig. 5: eine Detailansicht eines erfindungsgemäßen Steuer- und/oder Regelsystems gemäß Fig. 1 mit einer aktiven Verriegelungsvorrichtung;
- Fig. 6: eine Detailansicht eines erfindungsgemäßen Steuer- und/oder Regelsystems gemäß Fig. 5 mit einer inaktiven Verriegelungsvorrichtung;
- Fig. 7: eine Rückansicht eines erfindungsgemäßen Steuer- und/oder Regelsystems gemäß Fig. 1 mit einer inaktiven Neigungsvorrichtung;
- Fig. 8: eine Rückansicht eines erfindungsgemäßen Steuer- und/oder Regelsystems gemäß Fig. 7 mit einer aktiven Neigungsvorrichtung.

In der nachfolgenden Beschreibung werden für gleiche und gleichwirkende Teile dieselben Bezugszeichen verwendet.

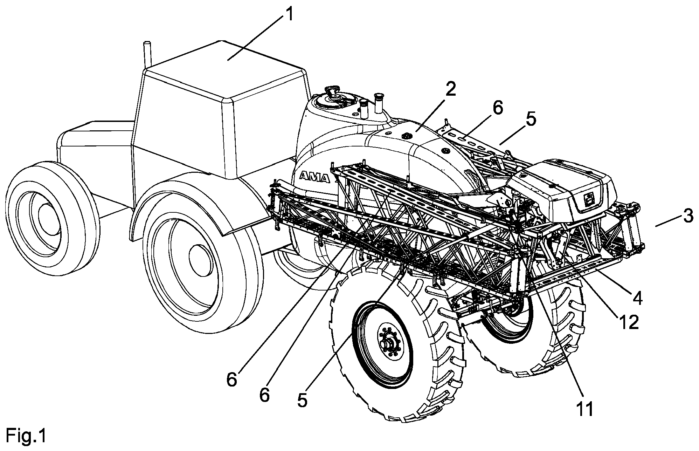

Fig. 1 zeigt eine perspektivische Ansicht eines erfindungsgemäßen Steuer- und/oder Regelsystems für ein landwirtschaftliches Nutzfahrzeug 1 mit einem Verteilergestänge 3 zum Ausbringen von Material, wie Düngemittel, Pflanzenschutzmittel oder Saatgut. Das Verteilergestänge 3 erstreckt sich quer zur Fahrtrichtung und weist ein Mittelteil 4 und zwei mit dem Mittelteil 4 verbundene seitliche Ausleger 5 auf. Die Ausleger 5 umfassen mehrere durch Gelenke verbundene Gestängeabschnitte 6. Die Gestängeabschnitte 6 sind durch einen Klappvorgang einklappbar und ausklappbar. Demnach ist das Verteilergestänge 3, und somit auch die Ausleger 5 mit den Gestängeabschnitten 6 von einer Arbeitsstellung in eine Transportstellung überführbar. Das Verteilergestänge 3 ist beispielhaft in der Transportstellung gezeigt. Die Transportstellung beschreibt hierbei eine Klappstellung, wobei die zueinander einklappbaren Gestängeabschnitte 6 vollständig zusammengeklappt sind.

Das Verteilergestänge 3 ist über einen Anhänger 2 an das landwirtschaftliche Nutzfahrzeug 1 gekoppelt und mittels einer Aufhängvorrichtung am Anhänger 2 angebracht.

Jedem Gestängeabschnitt 6 ist eine Stelleinrichtung zugeordnet, wodurch das Verteilergestänge 3 von einer Arbeits- in eine Transportstellung und umgekehrt überführt werden kann. Die Stelleinrichtung ist als hydraulische Einrichtung ausgebildet. Es können alternativ auch pneumatische oder elektrisch betriebene Einrichtungen verwendet werden.

Mit anderen Worten kann das Verteilergestänge 3, bzw. die einzelnen Gestängeabschnitte 6 mittels der jeweiligen hydraulischen Einrichtung ein- bzw. ausgeklappt werden. Die hydraulische Einrichtung kann beispielhaft als doppeltwirkender Hydraulikzylinder gebildet sein. Weiterhin umfasst die hydraulische Einrichtung eine Hydraulikleitung, welche zur Zufuhr von Hydraulikflüssigkeit an den Hydraulikzylinder angeschlossen ist, und wenigstens eine hydraulische Ventileinheit zur Regelung des Hydraulikdrucks und zur Steuerung des Klappvorgangs, wobei die Ventileinheit über ein Stellsignal einer Datenverarbeitungseinheit (nicht dargestellt) steuerbar ist.

Die Datenverarbeitungseinheit kann im landwirtschaftlichen Nutzfahrzeug 1 angebracht sein, und als Teil eines Bordcomputers ausgebildet sein. Die hydraulische Einrichtung kann die elektrischen Stellsignale der Datenverarbeitungseinheit in eine mechanische Bewegung umwandeln und damit das Verteilergestänge 3 sowohl von einer Transportstellung in eine Arbeitsstellung, als auch umgekehrt überführen, bzw. ein- und ausklappen.

Im Bereich der Gelenke sind beispielhaft als Potentiometer ausgebildete Sensoren (nicht dargestellt) zur Erfassung der jeweiligen Positionen der zueinander einklappbaren Gestängeabschnitte 6 angeordnet. Die Potentiometer sind also jeweils den Gelenken zwischen zwei zueinander einklappbaren Gestängeabschnitten 6 zugeordnet und somit zwischen zwei zueinander einklappbaren Gestängeabschnitten 6 angeordnet. Aufgrund der Messsignale der Sensoren, welche die Zwischenlage oder Endlage des jeweiligen Gestängeabschnitts 6 erfassen können, lässt sich demnach der Klappvorgang des Verteilergestänges 3 überwachen. Beispielhaft können die Potentiometer die Arbeitsstellung des zugehörigen Hydraulikzylinders der hydraulischen Einrichtung erfassen. Dabei kann die Arbeitsstellung des Hydraulikzylinders der Position der Kolbenstange des Hydraulikzylinders entsprechen.

Über Datenleitungen oder kabellos können die Messsignale der Sensoren an die Datenverarbeitungseinheit übermittelt werden. Die Messsignale der Sensoren können jeweils eine Endlage des Gestängeabschnitts 6 übermitteln, sodass das Ende des Ein- bzw. Ausklappvorgangs präzise bestimmt werden kann. Es können ebenso auch die Zwischenpositionen während des Klappvorgangs kontinuierlich oder in zeitlicher taktweiser Abfolge an die Datenverarbeitungseinheit übermittelt werden. Mit anderen Worten kann über die aktuelle Arbeitsstellung der Hydraulikzylinder die aktuelle Lage, also Zwischenlage oder Endlage, des Gestängeabschnitts erfasst werden. Die Endlage kann dabei der vollständig eingefahrenen oder vollständig ausgefahrenen Position der Kolbenstange des Hydraulikzylinders entsprechen.

Dabei ist die Datenverarbeitungseinheit derart konfiguriert, dass die Signale der Sensoren verarbeitet werden und auf deren Basis jeweils das Stellsignal für die hydraulische Einrichtung der Gestängeabschnitte 6 für die Ausführung des Klappvorgangs generiert wird. Da mittels der Sensoren das Ende des Klappvorgangs präzise überwacht und bestimmt werden kann, kann der auf den Klappvorgang folgende Teilschritt automatisch eingeleitet werden. Hierzu weist die Datenverarbeitungseinheit einen Automatikmodus auf, wodurch zumindest der auf den Klappvorgang folgende Teilschritt automatisch einleitbar ist.

Dabei kann das Verteilergestänge 3 bei der Überführung in die Transportstellung gemäß Fig. 1 nach dem Klappvorgang mittels einer Hubvorrichtung 11 automatisch abgesenkt werden. Demnach bildet das Absenken des Verteilergestänges 3 den dem Klappvorgang automatisch eingeleiteten Teilschritt. Die Hubvorrichtung 11 kann beispielhaft als höhenverstellbarer Hubrahmen mit einem Stellzylinder zum Anheben und Absenken des Verteilergestänges ausgebildet sein. Der Stellzylinder ist hierbei vorzugsweise mechanisch mit dem Hubrahmen verbunden. Dadurch ist eine direkte Krafteinleitung zur Höhenverstellung des Verteilergestänges 3 gegeben. Zur Ermittlung der Stellung der Hubvorrichtung ist zudem ein Sensor vorgesehen, welcher die Stellung der Hubvorrichtung ermittelt, beispielsweise dem Stellzylinder zugeordnete Endlagenschalter oder ein einem Gelenk der Hubvorrichtung zugeordnetes Potentiometer.

Am Mittelteil 4 des Verteilergestänges 3 ist weiterhin eine Verriegelungsvorrichtung 12 angebracht. Mittels der Verriegelungsvorrichtung 12 kann beispielsweise das Verteilergestänge 3 zum Schwingungsausgleich entriegelt oder verriegelt werden.

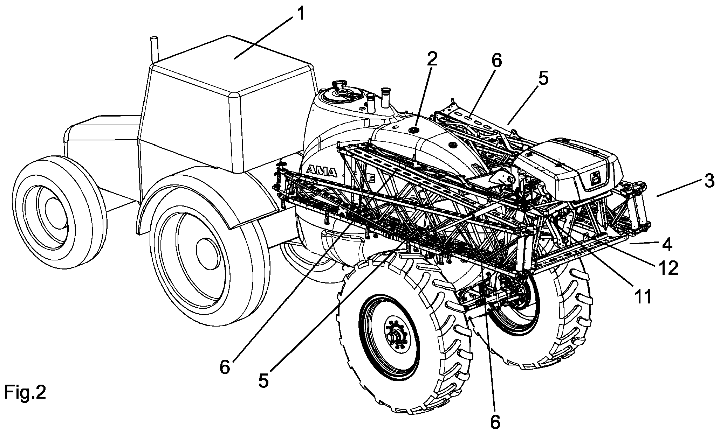

Fig. 2 zeigt eine perspektivische Ansicht eines erfindungsgemäßen Steuer- und/oder Regelsystems gemäß Fig. 1 mit einem Verteilergestänge 3 in einer angehobenen Transportstellung. Dabei kann das Verteilergestänge 3 mittels der Hubvorrichtung 11 angehoben und umgekehrt abgesenkt werden. Das Anheben/Absenken des Verteilergestänges 3 kann einen Teilschritt der Überführung in eine Arbeits-/ Transportstellung und umgekehrt bilden, insbesondere für das Arretieren oder Lösen der Arretierung vor oder nach einer Straßenfahrt. Vorzugsweise ist das Anheben und/oder Absenken des Verteilergestänges 3 als Teilschritt von der Datenverarbeitungseinheit automatisch einleitbar. Insbesondere kann das Verteilergestänge 3 bei einer Überführung in die Arbeitsstellung vor dem Klappvorgang automatisch angehoben werden oder nach dem Klappvorgang bei einer Überführung des Verteilergestänges 3 in eine Transportstellung gemäß Fig. 1 automatisch zur Arretierung abgesenkt werden.

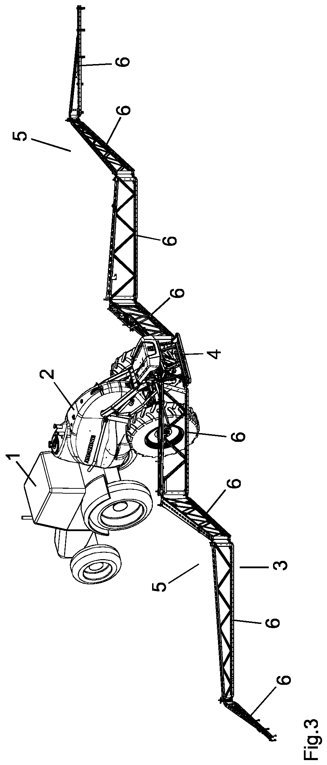

Fig. 3 zeigt eine perspektivische Ansicht eines erfindungsgemäßen Steuer- und/oder Regelsystems gemäß Fig. 1 mit einem Verteilergestänge 3 in einer teilweise ausgeklappten Arbeitsstellung. Alternativ kann das Verteilergestänge 3 auch in einer teilweise eingeklappten Arbeitsstellung gezeigt sein, je nachdem ob das Verteilergestänge 3 in eine Arbeits- oder Transportstellung überführt wird. Die einzelnen Gestängeabschnitte 6 stehen angewinkelt zueinander. Die Figur zeigt demnach eine Momentaufnahme des Verteilergestänges 3 während eines aktiven Klappvorgangs. Der Klappvorgang wird über die Datenverarbeitungseinheit und mittels der den Gestängeabschnitten 6 zugehörigen hydraulischen Einrichtungen gesteuert, wie in Fig. 1 beschrieben ist. Hierbei kann vorgesehen sein, dass alle Gestängeabschnitte 6 gleichzeitig geklappt werden. Alternativ kann auch vorgesehen sein, dass beispielsweise jeweils nur ein oder zwei Gestängeabschnitte 6 pro Seite gleichzeitig geklappt werden, um die mechanische Belastung auf das Gestänge zu begrenzen.

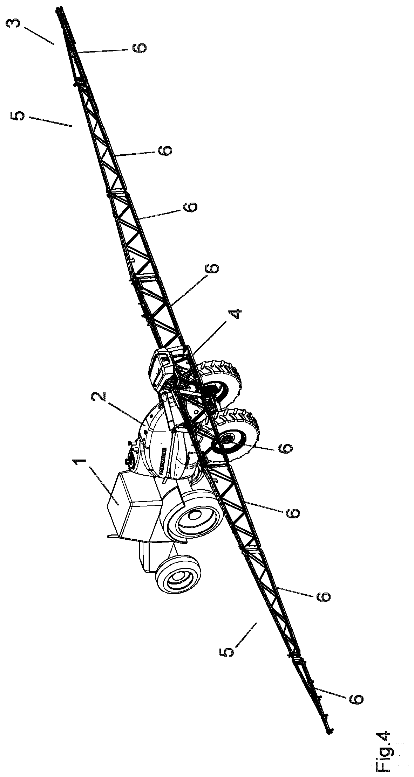

Fig. 4 zeigt eine perspektivische Ansicht eines erfindungsgemäßen Steuer- und/oder Regelsystems gemäß Fig. 1 mit einem Verteilergestänge 3 in einer Arbeitsstellung. Demnach befinden sich die einzelnen Gestängeabschnitte 6 in ihrer voll ausgeklappten Betriebsstellung. Die einzelnen Gestängeabschnitte 6 sind durch Gelenke miteinander verbunden. In der Arbeitsstellung verlaufen alle Gestängeabschnitte 6 geradlinig zueinander. Zwischen den einzelnen Gestängeabschnitten 6 sind hydraulische Einrichtungen angeordnet, wodurch der Klappvorgang in die Arbeitsstellung gesteuert werden kann.

Vorteilhafterweise wird nach dem Klappvorgang bei einer Überführung des Verteilergestänges 3 in eine Arbeitsstellung gemäß Fig. 4 das Verteilergestänge 3 automatisch entriegelt und/oder die Gestängeführung automatisch gestartet.

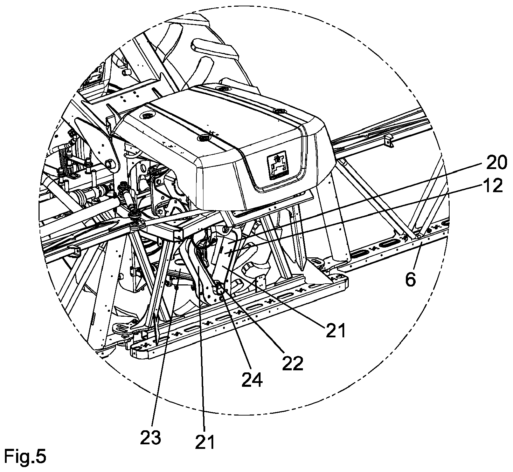

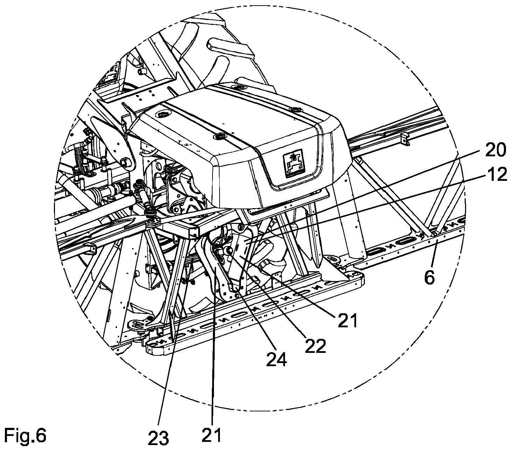

Hierzu zeigen die Figuren 5 und 6 eine Detailansicht eines erfindungsgemäßen Steuer- und/oder Regelsystems gemäß Fig. 1 mit einer aktiven und inaktiven Verriegelungsvorrichtung 12. Die Verriegelungsvorrichtung 12 dient der Ausführung eines Teilschritts zur Überführung des Verteilergestänges 3 in eine Transport-/ bzw.

Arbeitsstellung, welcher eine Verriegelung/Entriegelung des Verteilergestänges 3 umfasst.

Hierzu ist die Verriegelungsvorrichtung 12 aus einem Zwischenrahmen 20 gebildet, welcher drehbar um eine in Fahrtrichtung weisende Drehachse gelagert ist. Der Zwischenrahmen 20 kann mit dem Hubrahmen des Verteilergestänges 3 fest verriegelt werden. Dazu ist ein Riegelelement 23 vorgesehen, das beweglich mit dem Hubrahmen verbunden ist und in der Schließstellung in den Zwischenrahmen 20 eingreift. In der Mitte des Riegelelements 23 ist ein Kopf 22, beispielsweise in der Form einer Kugel vorgesehen, die in eine korrespondierende Ausnehmung 24 im Zwischenrahmen 20 in der Schließstellung eingreift.

Der Zwischenrahmen 20 weist zwei Arme 21 auf. Die Arme 21 verjüngen sich V-förmig in Richtung der korrespondierenden Ausnehmung 24. Zwischen den Armen 21 ist der Kopf 22 angeordnet. Wenn der Zwischenrahmen 20 verriegelt werden soll, schlägt der Kopf 22 an den Armen 21 an und zwingt den Zwischenrahmen 20 beim Verriegeln in die Mittenlage.

Die Entriegelung bzw. Verriegelung des Zwischenrahmens 20 erfolgt durch ein Betätigungselement. Dabei handelt es sich um einen Stellzylinder, der am Riegelelement 23 angreift und dieses entlang des Hubrahmens verschiebt. Eine andere Mechanik zur Verriegelung bzw. Entriegelung des Zwischenrahmens 20 ist möglich.

Demnach zeigt Fig. 5 eine aktive Verriegelungsvorrichtung 12 zur Verriegelung und Fig. 6 eine inaktive Verriegelungsvorrichtung 12 zur Entriegelung des Verteilergestänges 3. Vorzugsweise kann das Verteilergestänge 3 nach dem Klappvorgang bei einer Überführung in eine Arbeitsstellung automatisch entriegelt werden. Bei einer Überführung in die Transportstellung kann das Verteilergestänge 3 vor dem Klappvorgang automatisch verriegelt werden. Die Verriegelungsvorrichtung verfügt hierfür insbesondere über einen Sensor zur Ermittlung der Stellung der Verriegelungsvorrichtung.

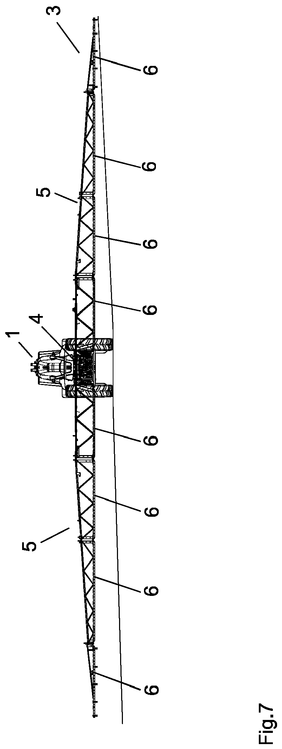

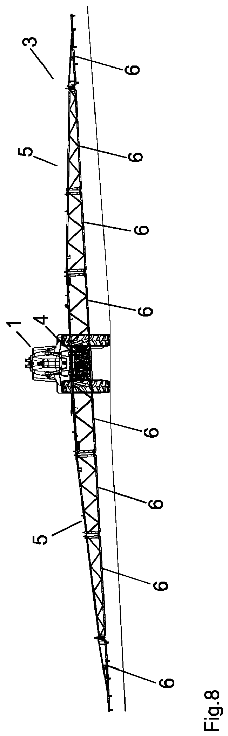

Die Figuren 7 und 8 zeigen eine Rückansicht eines erfindungsgemäßen Steuer- und/oder Regelsystems gemäß Fig. 1 mit einer inaktiven und aktiven Neigungsvorrichtung (nicht dargestellt). Durch die Neigungsvorrichtung, welche beispielhaft nicht dargestellte Stellzylinder umfassen kann, die den Auslegern 5 zugeordnet sind, ist das Verteilergestänge 3 um eine horizontale Achse schwenkbar angeordnet. Mit anderen Worten lässt sich das Verteilergestänge 3 vorzugsweise waagerecht ausrichten, oder in unebenem Gelände an die vorliegende Bodenkontur anpassen.

Die Neigungsverstellung, oder das waagrechte Ausrichten des Verteilergestänges 3 kann als Teilschritt zur Überführung des Verteilergestänges 3 von einer Transport- in eine Arbeitsstellung von der Datenverarbeitungseinheit automatisch eingeleitet werden. Im Zuge dessen kann die Gestängeführung automatisch gestartet oder beendet werden. Insbesondere bei einer Überführung in die Transportstellung kann das Verteilergestänge 3 vor dem Klappvorgang automatisch waagerecht ausgerichtet werden und/oder die Gestängeführung automatisch beendet werden. Die Neigungsvorrichtung verfügt hierfür insbesondere über einen Stellzylinder und zumindest einen dem Stellzylinder und/oder einem Gelenk der Hubvorrichtung zugeordneten Sensor, beispielsweise Endlagenschalter oder Potentiometer.

Zusammenfassend zeigen die Figuren 1-8 in ihrer Reihenfolge Teilschritte zur Überführung des Verteilergestänges 3 von einer Transportstellung in eine Arbeitsstellung und in umgekehrter Reihenfolge von einer Arbeitsstellung in eine Transportstellung.
Im Speziellen sind diese Teilschritte für die Überführung in eine Arbeitsstellung:
a) das Verteilergestänge wird angehoben (Fig. 1 bis Fig. 2);
b) das Verteilergestänge wird ausgeklappt (Fig. 3 bis Fig. 4);
c) das Verteilergestänge wird entriegelt (Fig. 5 bis Fig. 6);
d) die Gestängeführung wird automatisch gestartet (Fig. 8).

Im Speziellen sind diese Teilschritte für die Überführung in eine Transportstellung:
a) die Gestängeführung wird automatisch beendet;
b) das Verteilergestänge wird angehoben ;
c) das Verteilergestänge wird waagerecht zur Maschineausgerichtet (Fig. 7);
d) das Verteilergestänge wird verriegelt (Fig. 6 bis Fig. 5);
e) das Verteilergestänge wird eingeklappt (Fig. 4 bis Fig. 3);
f) das Verteilergestänge wird abgesenkt (Fig. 2 bis Fig. 1).

Mehrere oder alle Teilschritte sind vorteilhafterweise von der Datenverarbeitungseinheit automatisch einleitbar, wobei zumindest der auf den Klappvorgang folgende Teilschritt automatisch einleitbar ist. Vorzugsweise sind mehrere oder alle Teilschritte zur Überführung in eine Arbeits- bzw. Transportstellung basierend auf einer einzelnen Benutzereingabe, insbesondere mittels einer Automatiktaste, einleitbar.

Weitere Teilschritte für das Überführen in die Arbeitsstellung und/oder die Transportstellung können vorgesehen sein und durch das erfindungsgemäße Steuer- und/oder Regelsystem und Verfahren berücksichtigt werden. Hierbei kann es sich um Teilschritte handeln, die ganz zu Beginn oder ganz am Ende durchzuführen sind. Alternativ können jedoch auch weitere Teilschritte zwischen zwei bekannte und aufeinanderfolgende Teilschritte eingefügt werden. Beispielsweise kann vorgesehen sein, beim Überführen des Verteilergestänges in die Transportstellung nach dem Schritt b) oder auch nach dem Schritt c) einen zusätzlichen Schritt einzuführen, der dazu führt dass die einzelnen Abschnitte des Verteilergestänges in einer horizontalen Ebene parallel zueinander ausgerichtet werden. Dies ist in den Fällen von Bedeutung, in denen das Verteilergestänge über zumindest jeweils ein Gelenk und einen entsprechenden Stellzylinder pro Verteilergestängeseite zum An- und Abwinkeln von Abschnitten des Verteilergestänges verfügt. Die einzelnen Abschnitte werden also vor dem Einklappvorgang in eine parallele Stellung gebracht und die Stellzylinder zum An- und Abwinkeln so in Transportstellung bewegt. Umgekehrt beinhaltet der Schritt des Startens der Gestängeführung wahlweise auch einen Schritt, welcher das An- und Abwinkeln von Verteilergestängeabschnitten erlaubt, sofern die mittels Sensoren erfasste Bodenkontur dies für eine Parallelausrichtung des Verteilergestänges zum Untergrund erfordert.

### Bezugszeichenliste

- 1: landwirtschaftliches Nutzfahrzeug
- 2: Anhänger
- 3: Verteilergestänge
- 4: Mittelteil
- 5: Ausleger
- 6: Gestängeabschnitt
- 11: Hubvorrichtung
- 12: Verriegelungsvorrichtung
- 20: Zwischenrahmen
- 21: Arm
- 22: Kopf
- 23: Riegelelement
- 24: Ausnehmung

## Patentansprüche

1. Steuer- und/oder Regelsystem für ein landwirtschaftliches Nutzfahrzeug (1) mit einem Verteilergestänge (3) zum Ausbringen von Material, wie Düngemittel, Pflanzenschutzmittel oder Saatgut, welches sich quer zur Fahrtrichtung erstreckt und ein Mittelteil (4) und zwei mit dem Mittelteil (4) verbundene seitliche Ausleger (5) mit mehreren zueinander durch einen Klappvorgang in Transportstellung einklappbaren und in Arbeitsstellung ausklappbaren, durch Gelenke verbundene Gestängeabschnitte (6) aufweist, wobei jedem Gestängeabschnitt (6) eine Stelleinrichtung zugeordnet ist, wodurch das Verteilergestänge (3) von einer Transportstellung in eine Arbeitsstellung und umgekehrt überführbar ist, wobei die Überführung in eine Transport-/ bzw. Arbeitsstellung mehrere Teilschritte umfasst, den Klappvorgang einschließend, und wobei das System mehrere Sensoren und eine Datenverarbeitungseinheit aufweist, welche derart konfiguriert ist, dass die Signale der Sensoren verarbeitet werden und auf deren Basis ein Stellsignal für die Stelleinrichtung generiert wird,
**dadurch gekennzeichnet, dass**
die Datenverarbeitungseinheit einen Automatikmodus aufweist, wodurch zumindest der auf den Klappvorgang folgende Teilschritt automatisch einleitbar ist.

2. System nach Anspruch 1,
**dadurch gekennzeichnet, dass**
bei einer Überführung des Verteilergestänges (3) in eine Transportstellung der auf den Klappvorgang folgende Teilschritt durch ein Absenken des Verteilergestänges (3) gebildet ist.

3. System nach einem der vorhergehenden Ansprüche,
**dadurch gekennzeichnet, dass**
bei einer Überführung des Verteilergestänges (3) in eine Arbeitsstellung der auf den Klappvorgang folgende Teilschritt durch eine Entriegelung des Verteilergestänges (3) und/oder ein automatisches Starten der Gestängeführung gebildet ist.

4. System nach einem der vorhergehenden Ansprüche,
**gekennzeichnet, durch**
eine Verriegelungsvorrichtung (12) zur Ausführung eines Teilschritts zur Überführung des Verteilergestänges (3) in eine Transport-/ bzw. Arbeitsstellung, welcher eine Verriegelung/Entriegelung des Verteilergestänges (3) umfasst.

5. System nach einem der vorhergehenden Ansprüche,
**gekennzeichnet, durch**
eine Neigungsvorrichtung zur Ausführung eines Teilschritts zur Überführung des Verteilergestänges (3) in eine Transport-/ bzw. Arbeitsstellung, welcher eine Neigungsverstellung des Verteilergestänges (3) umfasst.

6. System nach einem der vorhergehenden Ansprüche,
**gekennzeichnet, durch**
eine Hubvorrichtung (11) zur Ausführung eines Teilschritts zur Überführung des Verteilergestänges (3) in eine Transport-/ bzw. Arbeitsstellung, welcher ein Anheben/Absenken des Verteilergestänges (3) umfasst.

7. System nach einem der vorhergehenden Ansprüche,
**dadurch gekennzeichnet, dass**
die Sensoren derart ausgebildet und/oder angeordnet sind, dass der Klappvorgang, insbesondere das Ende des Klappvorgangs, überwachbar ist.

8. System nach einem der vorhergehenden Ansprüche,
**dadurch gekennzeichnet, dass**
die Sensoren jeweils einem Gelenk und/oder einer Stelleinrichtung zwischen zwei zueinander einklappbaren Gestängeabschnitten (6) zugeordnet sind, wodurch eine Position des jeweiligen Gestängeabschnitts (6) erfassbar ist.

9. System nach einem der vorhergehenden Ansprüche,
**dadurch gekennzeichnet, dass** mehrere oder alle Teilschritte basierend auf den Messsignalen der Sensoren mittels der Datenverarbeitungseinheit automatisch einleitbar sind.

10. System nach einem der vorhergehenden Ansprüche,
**dadurch gekennzeichnet, dass**
mehrere oder alle Teilschritte durch eine einzige Benutzereingabe einleitbar sind.

11. Landwirtschaftliches Nutzfahrzeug (1) zum Ausbringen von Material, wie Düngemittel, Pflanzenschutzmittel oder Saatgut mit einem Steuer- und/oder Regelsystem nach einem der vorhergehenden Ansprüche.

12. Verfahren zur Steuerung und/oder Regelung eines landwirtschaftlichen Nutzfahrzeuges (1) mit einem Steuer- und/oder Regelsystem, welches ein Verteilergestänge (3) zum Ausbringen von Material, wie Düngemittel, Pflanzenschutzmittel oder Saatgut umfasst, welches sich quer zur Fahrtrichtung erstreckt und ein Mittelteil (4) und zwei mit dem Mittelteil (4) verbundene seitliche Ausleger (5) mit mehreren zueinander durch einen Klappvorgang in Transportstellung einklappbaren und in Arbeitsstellung ausklappbaren, durch Gelenke verbundene Gestängeabschnitte (6) aufweist, wobei jedem Gestängeabschnitt (6) eine Stelleinrichtung zugeordnet ist, wodurch das Verteilergestänge (3) von einer Transportstellung in eine Arbeitsstellung und umgekehrt überführbar ist, wobei die Überführung in eine Transport-/ bzw. Arbeitsstellung mehrere Teilschritte umfasst, den Klappvorgang einschließend, und wobei das System mehrere Sensoren und eine Datenverarbeitungseinheit aufweist, welche derart konfiguriert ist, dass die Signale der Sensoren verarbeitet werden und auf deren Basis ein Stellsignal für die Stelleinrichtung generiert wird,
**gekennzeichnet,** dass
zumindest der auf den Klappvorgang folgende Teilschritt automatisch eingeleitet wird.

13. Verfahren nach Anspruch 12,
**gekennzeichnet,** dass
die mehreren Sensoren eine Position des jeweiligen Gestängeabschnitts (6) erfassen und mehrere oder alle Teilschritte basierend auf den Messsignalen der Sensoren mittels der Datenverarbeitungseinheit automatisch eingeleitet werden.

14. Verfahren nach einem der Ansprüche 12 oder 13,
**dadurch gekennzeichnet, dass**
nach dem Klappvorgang bei einer Überführung des Verteilergestänges (3) in eine Transportstellung das Verteilergestänge (3) automatisch abgesenkt wird.

15. Verfahren nach einem der Ansprüche 12 bis 14,
**dadurch gekennzeichnet, dass**
das Verteilergestänge (3) bei einer Überführung in die Transportstellung vor dem Klappvorgang automatisch waagerecht ausgerichtet und/oder verriegelt wird und/oder die Gestängeführung automatisch beendet wird.

16. Verfahren nach einem der Ansprüche 12 bis 15,
**dadurch gekennzeichnet, dass**
nach dem Klappvorgang bei einer Überführung des Verteilergestänges (3) in eine Arbeitsstellung das Verteilergestänge (3) automatisch entriegelt wird und/oder die Gestängeführung automatisch gestartet wird.

17. Verfahren nach einem der Ansprüche 12 bis 16,
**dadurch gekennzeichnet, dass**
das Verteilergestänge (3) bei einer Überführung in die Arbeitsstellung vor dem Klappvorgang automatisch angehoben wird.
